# EUROPÄISCHE PATENTANMELDUNG

(11) **EP 4 674 534 A1**
(43) Veröffentlichungstag der Anmeldung: **07.01.2026**
(21) Anmeldenummer: 25178658.8
(22) Anmeldetag: 23.05.2025
(51) Int. Cl.: B03B 5/00, B03B 9/06, B09B 3/30, B03B 5/28, G21F 9/34, B09B 3/40, B09B 101/35

(54) **SANIERUNG UND AUFBEREITUNG VON SCHADSTOFFHALTIGEM ABBRUCHMATERIAL**

(30) Priorität: 23.08.2024 EP 24196308
(71) Anmelder: PMO ProjektManagement GmbH, 55268 Nieder-Olm (DE)
(72) Erfinder: Böhm, Uta Therese, 56271 Isenburg (DE); Herrmann, Bastian Ulrich, 67141 Neuhofen (DE); Oehm, Peter Matthias, 55268 Nieder-Olm (DE)
(74) Vertreter: Bosch Jehle Patentanwaltsgesellschaft mbH

(57) **Zusammenfassung**

Die Erfindung betrifft ein Verfahren zur Sanierung und Aufbereitung von Abbruchmaterial, das schadstoffhaltige mineralische Bestandteile enthält, wobei das Verfahren die folgenden Schritte aufweist: Aufbrechen des Abbruchmaterials, um die schadstoffhaltigen mineralischen Bestandteile zu zerteilen; Trocken- oder Nassklassieren des aufgebrochenen Abbruchmaterials, um daraus mindestens eine Fraktion abzutrennen; Nasssortieren der abgetrennten Fraktion, um diese in einen schadstofffreien mineralischen Teil und einen schadstoffhaltigen Teil zu trennen, wobei im Schritt des Nasssortierens die abgetrennte Fraktion in eine strömende Flüssigkeit gegeben wird, um schadstofffreie mineralische und schadstoffhaltige Bestandteile der abgetrennten Fraktion der Dichte nach zu trennen, und so den schadstofffreien mineralischen Teil und den schadstoffhaltigen Teil aus der abgetrennten Fraktion zu erhalten. Ein weiterer Aspekt der Erfindung betrifft ein System zur Sanierung und Aufbereitung von Abbruchmaterial, das schadstoffhaltige mineralische Bestandteile enthält. Die Schadstoffe können z.B. Asbest oder radioaktive Kontaminationen sein.

## Beschreibung

Die Erfindung betrifft ein Verfahren und ein System zur Sanierung und Aufbereitung von Abbruchmaterial, das mineralische und schadstoffhaltige Bestandteile enthält.

Bei der Sanierung und dem Rückbau von Gebäuden, Kraftwerken oder Infrastrukturanlagen fallen zahlreiches mineralisches Abbruchmaterial wie Beton und Mauerwerk an, die möglicherweise mit Putzen und anderen anhaftenden Stoffen vermengt sein können. Dieses anfallende mineralischen Material kann Schadstoffe aus einer großen Bandbreite möglicher Schadstoffe, z.B. polychlorierte Biphenyle (PCB), polyzyklische aromatische Kohlenwasserstoffe (PAK), Schwermetalle, extrahierbare organisch gebundene Halogene (EOX) und leichtflüchtige aromatische Kohlenwasserstoffe (BTEX) enthalten. Als Sonderfall fallen beim Rückbau von nuklearen Anlagen Materialien (z.B. Beton) an, welche radioaktives Material aufgenommen haben oder radioaktiv aktiviert wurden und somit kontaminiert sind. Aufgrund von Grenzwerten und gesetzlichen Vorgaben werden diese Materialien im Rahmen des Rückbaus in verschiedene Klassen eingestuft, die über die weitere Verwendung entscheiden. In vielen Fällen führt die Einstufung zur Entsorgung des Materials. Eine Verwertung bzw. Aufbereitung von schadstoffhaltigen mineralischen Materialien ist bisher nur unzureichend vorgesehen.

Der Erfindung liegt daher die technische Aufgabe zugrunde, eine Sanierung und Aufbereitung von schadstoffhaltigem Abbruchmaterial bereitzustellen, die eine effiziente Trennung von schadstoffhaltigem und nicht-schadstoffhaltigem Material ermöglicht. Wie unten noch näher ausgeführt, kann es sich bei dem schadstoffhaltigen Material auch um radioaktiv kontaminiertes Material handeln, sodass die Aufgabe konkret in einer effizienten Trennung von kontaminiertem und nicht kontaminiertem Material (bzw. von Materialien mit unterschiedlicher Strahlenkonzentration) liegen kann.

Diese Aufgabe wird durch das erfindungsgemäße Verfahren gemäß Anspruch 1 und das erfindungsgemäße System gemäß Anspruch 14 gelöst. Vorteilhafte Ausgestaltungen der vorliegenden Erfindung sind in den Unteransprüchen 2 bis 13 und 15 angegeben.

Die Erfindung betrifft ein Verfahren zur Sanierung und Aufbereitung von Abbruchmaterial, das schadstoffhaltige mineralische Bestandteile enthält, wobei das Verfahren die folgenden Schritte aufweist:
- Aufbrechen des Abbruchmaterials, um die schadstoffhaltigen mineralischen Bestandteile zu zerteilen;
- Trocken- oder Nassklassieren des aufgebrochenen Abbruchmaterials, um daraus mindestens eine Fraktion abzutrennen;
- Nasssortieren der abgetrennten Fraktion, um diese in einen schadstofffreien mineralischen Teil und einen schadstoffhaltigen Teil zu trennen,
   wobei im Schritt des Nasssortierens die abgetrennte Fraktion in eine strömende Flüssigkeit gegeben wird, um schadstofffreie mineralische und schadstoffhaltige Bestandteile der abgetrennten Fraktion der Dichte nach zu trennen, und so den schadstofffreien mineralischen Teil und den schadstoffhaltigen Teil aus der abgetrennten Fraktion zu erhalten,
   wobei die schadstofffreien mineralischen Bestandteile der abgetrennten Fraktion eine höhere Dichte aufweisen als eine vorbestimmte Trenndichte, wohingegen die schadstoffhaltigen Bestandteile der abgetrennten Fraktion eine niedrigere Dichte als die vorbestimmte Trenndichte aufweisen, oder
   die schadstofffreien mineralischen Bestandteile der abgetrennten Fraktion eine niedrigere Dichte aufweisen als die vorbestimmte Trenndichte, wohingegen die schadstoffhaltigen Bestandteile der abgetrennten Fraktion eine höhere Dichte als die vorbestimmte Trenndichte aufweisen,
   wobei die vorbestimmte Trenndichte auf Basis der Dichte der schadstofffreien mineralischen und der schadstoffhaltigen Bestandteile der abgetrennten Fraktion eingestellt ist.

Als Abbruchmaterial werden das beim Abriss oder der Sanierung von Bauwerken, wie von Häusern, Brücken und Kraftwerken anfallende Material, aber auch Baureststoffe angesehen, die mineralische Baustoffe und Schadstoffe enthalten. Typische in Bauwerken verwendete mineralische Baustoffe sind z.B. Beton, Gips, Kalksandstein und Ziegel. An diesen Baustoffen wurde in der Vergangenheit je nach Anwendung schadstoffhaltige Beschichtungen, Fugen, Dämmstoffe oder Farben aufgebracht oder schadstoffhaltige Bestandteile wie Schlacke hinzugefügt. Das bedeutet, die Schadstoffe befinden sich in gebundener Form in den Baustoffen und damit im Abbruchmaterial. Ferner ist es denkbar, dass sich im Rahmen des Rückbaus Schadstoffe, die zuvor an mineralischen Bestandteilen des Abbruchmaterials anhafteten, mit diesem vermischt werden. **In** nuklearen Anlagen können die genannten Baustoffe die strahlenden Eigenschaften der verwendeten, strahlungsemittierenden Stoffe annehmen, z.B. durch die Aufnahme radioaktiver Partikel oder durch Aktivierung.

Das Abbruchmaterial liegt bevorzugt in Bruchstücken vor, die eine maximale Kantenlänge von 80 cm, bevorzugt 40 cm, aufweisen. Hierzu wird vorzugsweise das Abbruchmaterial (vorbereitend) zerkleinert bzw. pulverisiert. Typischerweise kommen für die Zerkleinerung des Abbruchmaterials Bagger mit zangenähnlichen Anbauteilen (Pulverisierer) zum Einsatz, die das Material zwischen zwei Brechbacken zerlegen. Dies ist von Vorteil, denn das zerkleinerte Abbruchmaterial lässt sich mithilfe eines Radladers und/oder einem Förderband einfach transportieren.

Als Schadstoffe werden Stoffe oder Stoffgemische angesehen, die schädlich für Menschen, Tiere, Pflanzen oder andere Organismen sind oder negative Auswirkungen auf ganze Ökosysteme haben. Typische Schadstoffe, die in Abbruchmaterial enthalten sein können, umfassen beispielweise organische Schadstoffe wie polychlorierte Biphenyle (PCB), polyzyklische aromatische Kohlenwasserstoffe (PAK), Schwermetalle, extrahierbare organisch gebundene Halogene (EOX) und leichtflüchtige aromatische Kohlenwasserstoffe (BTEX). Ein weiterer potenzieller Schadstoff kann Asbest sein, der jedoch auch ausgeschlossen sein kann (bzw. wird optional als Schadstoff nicht berücksichtigt). Neben den genannten Schadstoffen können im Baustoff von nuklearen bzw. kerntechnischen Anlagen auch radioaktive Kontaminationen entstehen. Diese sind entsprechend im resultierenden Abbruchmaterial der Anlagen zu finden. Radioaktive Kontamination kann dadurch entstehen, dass sich radioaktives Material auf Oberflächen in den nuklearen Anlagen ablagern oder die Baustoffe (teilweise) radioaktiv aktiviert werden. Als Schadstoffe können daher neben den genannten Bauschadstoffen wie PCB, PAK und BTEX auch Stoffe verstanden werden, welche strahlungskontaminiert, also mit radioaktivem Material (radioaktiven Partikeln) kontaminiert bzw. strahlungsbelastet oder durch radioaktive Strahlung aktiviert sind.

Die Klassifizierung der Strahlungskonzentration des kontaminierten Materials erfolgt gemäß den gesetzlichen Vorgaben am Ausführungsort bzw. den Entsorgungsvorgaben (z.B. Einstufung in schwach-, mittel- und hochradioaktive Abfälle). Stoffe, die eine ausreichend gute Klassifizierung (gegenüber den kontaminierten Ursprungsmaterialien) erhalten können, werden im Folgenden als strahlungsfrei oder gering strahlungskontaminiert bezeichnet. Für diese Stoffe ist die Strahlungskonzentration im Ergebnis derart gering, dass eine weitere Abtrennung von kontaminierten Bestandteilen nicht erforderlich ist. Entsprechend handelt es sich bei den hier angesprochenen schadstofffreien Bestandteilen, Materialien, Fraktionen usw. um strahlungsfreie oder gering strahlungskontaminierte Bestandteile, Materialien, Fraktionen usw., sofern eine Trennung von kontaminiertem und nicht kontaminiertem Material erfolgt.

In dem ersten Verfahrensschritt wird das Abbruchmaterial aufgebrochen (Brechgut), um die schadstoffhaltigen mineralischen Bestandteile jeweils zu zerteilen, so dass eine ausreichende Trennung von mineralischen - nicht schadstoffhaltigen - Bestandteilen und schadstoffhaltigen Bestandteilen erzielt wird. Es ist von Vorteil die nicht-schadstoffhaltigen mineralischen und schadstoffhaltigen (mineralischen oder organischen) Bestandteile in kleine Bruchstücke zu zerlegen, um einen hohen Grad der Extraktion von Schadstoffen aus dem Abbruchmaterial zu erreichen. Das Aufbrechen des Abbruchmaterials kann mit einem Brechgerät, bevorzugt mit einem (mobilen) Prallmühlenbrecher oder Backenbrecher, erfolgen.

Vorzugsweise werden nach dem Aufbrechen des Abbruchmaterials magnetische Bestandteile aus dem aufgebrochenen Abbruchmaterial magnetisch abgetrennt. Hierfür kann ein magnetischer Abscheider verwendet werden, um z.B. Metallteile aus dem aufgebrochenen Abbruchmaterial effizient zu entfernen.

Im Anschluss an das Aufbrechen des Abbruchmaterials und dem optionalen Schritt des magnetischen Abtrennens wird das aufgebrochene Material trocken- oder nassklassiert. Erfindungsgemäß wird beim Klassieren mindestens eine Fraktion abgetrennt. Diese kann eine Mittelfraktion, d.h. eine Fraktion mit mittlerer Korngröße, sein. Zusätzlich ist aber auch eine Abtrennung in eine Feinfraktion, deren Korngröße unter der Korngröße der abgetrennten Fraktion liegt, und/oder in eine Grobfraktion, deren Korngröße über der Korngröße der abgetrennten Fraktion liegt, denkbar. Im Allgemeinen wird eine Fraktion mit kleiner Korngröße als Feinfraktion und eine Fraktion mit großer Korngröße als Grobfraktion bezeichnet.

Beim Klassieren handelt es sich um eine mechanische Größentrennung von schüttfähigem Aufgabegut (des aufgebrochenen Abbruchmaterials / Brechguts). In Abhängigkeit der geltenden Umweltauflagen kann das Klassieren ohne den Einsatz einer Flüssigkeit (Trockenklassieren) oder befeuchtet, meist mit Wasser, (Nassklassieren) erfolgen. Beim Trockenklassieren kommt ein Klassiergerät, wie eine Siebmaschine, zur Anwendung, die das Aufgabegut entsprechend den gewünschten Trennkriterien, z.B. nach der Anzahl der Siebebenen mit vorgegebener Siebmaschenweite oder Lochgröße, entsprechend der Korngrößenverteilung in mindestens eine Fraktion, z.B. eine Mittelfraktion und optional in eine Feinfraktion und/oder eine Grobfraktion trennt. Beim Nassklassieren wird das Aufgabegut befeuchtet und, z.B. mithilfe einer Siebmaschine, nach Korngröße getrennt.

Sollten im aufgebrochenen Abbruchmaterial zu große Bestandteile verblieben sein, kann eine weitere Siebebene vorgeschaltet werden, um eine Grobfraktion, Fraktion mit großer Korngröße, abzutrennen. Das Trocken- oder Nassklassieren hat den besonderen Vorteil, dass die so erhaltenen Fraktionen jeweils einer spezifischen Weiterbehandlung zugeführt werden können, die auf die einzelnen Korngrößen abgestimmt ist. Das heißt, die Feinfraktion kann einer anderen, angepassten Weiterbehandlung zugeführt werden als die Mittelfraktion (oder die Grobfraktion).

Bevorzugt wird daher im Schritt des Trocken- oder Nassklassierens das aufgebrochene Abbruchmaterial zusätzlich in eine Grobfraktion getrennt. Damit kann die Grobfraktion einer weiteren Zerkleinerung, insbesondere mit weiterem Abbruchmaterial, unterzogen werden. Ein Abtrennen einer Grobfraktion ist dann sinnvoll, wenn das aufgebrochene Abbruchmaterial eine bestimmte maximale Korngröße überschreitet. Denn je nach Wahl des Brechgeräts kann die Korngrößenverteilung nach einer Zerkleinerung (einem Aufbrechvorgang) recht breit ausfallen. Kommen als Brechgerät z.B. Prallmühlenbrecher zum Einsatz, ist damit zu rechnen, dass nach einer ersten Zerkleinerung grobe Bestandteile erhalten bleiben und erst nach einer weiteren Zerkleinerung durch den Prallmühlenbrecher die gewünschte Korngröße erreichen. Der vorgenannte Schritt des Aufbrechens lässt sich daher optional mit einer Rückführungsschleife ergänzen. Entsprechend kann in einem weiteren Schritt die Grobfraktion aufgebrochen werden, um die in der Grobfraktion enthaltenen mineralischen und schadstoffhaltigen Bestandteile weiter zu zerteilen. Ganz konkret wird die erhaltene Grobfraktion also z.B. in den Prallmühlenbrecher zurückgeführt und so in kleinere Bruchstücke zerteilt. Vorzugsweise wird die Grobfraktion zusammen mit weiterem Abbruchmaterial aufgebrochen.

Vorzugsweise weist die abgetrennte Fraktion (Mittelfraktion) - welche durch das Trocken- oder Nassklassieren erhalten wird - eine Korngröße von mehr als 0 mm und bis zu 32 mm, bevorzugt von 2 mm bis 8 mm, auf. Bei der Feinfraktion handelt es sich typischerweise um (schadstoffhaltige) Betonsande und/oder Stäube mit einer Korngröße von z.B. weniger als 5 mm, insbesondere weniger als 2 mm. Die Grobfraktion besteht z.B. aus aufgebrochenem Abbruchmaterial mit einer Korngröße von mehr als 32 mm, bevorzugt von mehr als 8 mm.

Erfindungsgemäß wird die abgetrennte Fraktion - durch das Trocken- oder Nassklassieren des Abbruchmaterials erhalten - nasssortiert. Dementsprechend werden die Bestandteile des aufgebrochenen Abbruchmaterials (z.B. mit mittlerer Korngröße) in einer strömenden Flüssigkeit aufgrund unterschiedlicher Absinkgeschwindigkeiten oder Bewegungsbahnen - bedingt durch die unterschiedlichen Dichten der Bestandteile - aufgetrennt. Grundsätzlich wird beim Nasssortieren eine vorbestimmte Trenndichte verwendet, um Stoffe mit Bestandteilen unterschiedlicher Dichte in Abhängigkeit von der gewählten Trenndichte voneinander zu trennen. Die Bestandteile mit einer Dichte oberhalb der Trenndichte werden von den Bestandteilen mit einer Dichte unterhalb der Trenndichte getrennt. So lässt sich beispielweise durch die geeignete Wahl der Flüssigkeit, meist Wasser, zudem erreichen, dass bestimmte Bestandteile im aufgebrochenen Abbruchmaterial aufschwimmen und andere aufgrund ihrer höheren Dichte absinken. Dieser Umstand ermöglicht es, Bestandteile im Abbruchmaterial mit unterschiedlicher Dichte besonders leicht voneinander räumlich zu trennen. Im Ergebnis lässt sich so eine Fraktionierung in eine schadstofffreie mineralische Fraktion, eine schadstoffhaltige (mineralische) Fraktion und optional am Boden abgesetzten (schadstoffhaltigen) Schlamm erhalten. Je nach Zusammensetzung des Abbruchmaterials stellt der nach dem Nasssortieren der abgetrennten Fraktion erhaltene schadstofffreie mineralische Anteil/Teil die Leichtfraktion und der schadstoffhaltige Anteil/Teil die Schwerfraktion oder umgekehrt dar.

Es ist ferner zweckmäßig, wenn das Nasssortieren mithilfe eines Aufstromverfahrens oder Hub-Senkverfahrens erfolgt. Bei beiden Verfahren wird auf unterschiedliche Art und Weise eine nach oben gerichtete Strömung in einer Flüssigkeit erzeugt. Mittels dieser Strömung erfolgt eine Dichtetrennung der abgetrennten Fraktion. Für das Aufstromverfahren kann ein in der Flüssigkeit befindlicher antreibbarer Propeller und für das Hub-Senkverfahren eine auf- und absinkende Platte die gewünschte Strömung erzeugen, so dass Materialien niedrigerer Dichte (Leichtfraktion) durch die Strömung erfasst und an die Oberfläche der Flüssigkeit befördert werden, während Materialien höherer Dichte (Schwerfraktion) absinken. Durch Einstellmöglichkeiten im Aufstromverfahren (z.B. Drehgeschwindigkeit des Propellers bzw. Bewegungsgeschwindigkeit der auf- und absinkenden Platte) kann die Strömungsgeschwindigkeit den jeweiligen Anforderungen entsprechend angepasst werden.

Da die Dichten der einzelnen Bestandteile (z.B. Schlacke, Kies, Bindemittel, organische Materialien, mineralische Beschichtungen, Epoxidharze) im Abbruchmaterial stark variieren können, ist es sinnvoll, die Dichte der jeweiligen Bestandteile zu bestimmen, um die gewünschte Separation im anschließenden Sortierprozess zu erreichen. Es ist vorgesehen, die vorbestimmte Trenndichte auf Basis der Dichte der (in der abgetrennten Fraktion enthaltenen) schadstofffreien mineralischen Bestandteile auf der einen Seite und der schadstoffhaltigen Bestandteile auf der anderen Seite einzustellen. Denn grundsätzlich haben die verschiedenen schadstoffhaltigen Materialien Dichten, die die des Betons unterschreiten (z.B. organische Materialien) oder überschreiten (z.B. Schlacke) können. Auch eine Trennung des Betons selbst in z.B. eine schadstofffreie Kiesfraktion und eine schadstoffhaltige Bindemittelfraktion ist möglich. Das Ergebnis ist dann, dass je nach Zusammensetzung der eingesetzten Materialien im Abbruchmaterial die schadstofffreie Fraktion mehr oder weniger stark gegenüber der schadstoffhaltigen Fraktion absinken kann. Entsprechend kann, wie bereits erwähnt, die schadstoffhaltige oder die schadstofffreie Fraktion die Leicht- oder die Schwerfraktion sein.

Vorzugsweise umfasst das betrachtete Verfahren daher zusätzlich die folgenden Schritte: Bestimmen der Dichte von schadstofffreien mineralischen Bestandteilen und schadstoffhaltigen Bestandteilen aus einer Probe, die aus der abgetrennten Fraktion entnommen wird oder dieser entspricht; Bestimmen der vorbestimmten Trenndichte, die zwischen der Dichte der schadstofffreien mineralischen Bestandteile und der Dichte der schadstoffhaltigen Bestandteile aus der Probe liegt. Damit kann die vorbestimmte Trenndichte auf die Dichte der schadstofffreien mineralischen Bestandteile und der schadstoffhaltigen Bestandteile im Abbruchmaterial abgestimmt werden, um eine möglichst effiziente Dichtetrennung der Bestandteile zu gewährleisten. Die vorbestimmte Trenndichte liegt daher bevorzugt (genau) zwischen der Dichte eines schadstoffhaltigen Bestandteils und eines schadstofffreien mineralischen Bestandteils aus der abgetrennten Fraktion liegen. Denkbar ist auch, die Dichte mehrerer schadstoffhaltiger Bestandteile zusammenzufassen und daraus eine gemittelte Dichte zu ermitteln. Gleichermaßen kann dies bei den schadstofffreien mineralischen Bestandteilen erfolgen, sofern diese unterschiedlichen Dichten aufweisen. Aus den gemittelten Dichten (der schadstofffreien mineralischen Bestandteile und der schadstoffhalten Bestandteile) lässt sich dann bevorzugt die vorbestimmte Trenndichte bestimmen, die eine Dichtetrennung ermöglicht.

Im Allgemeinen wird bevorzugt vor dem Schritt des Aufbrechens des Abbruchmaterials, vor dem Schritt des Trocken- oder Nassklassierens des aufgebrochenen Abbruchmaterials oder vor dem Schritt des Nasssortierens der abgetrennten Fraktion die vorbestimmte Trenndichte bestimmt. Hierbei wird besonders bevorzugt die vorbestimmte Trenndichte analog zu den vorgenannten Schritten auf Basis einer Probe ermittelt.

Bei strahlungskontaminierten Materialien ist es außerdem hilfreich, die Strahlenbelastung bzw. -intensität (Kontaminationsgrad) der einzelnen Bestandteile zu bestimmen. Dies erfordert das Bereitstellen von exemplarischen repräsentativen Bestandteilen der abgetrennten Fraktion. Dabei kann es sich um eine Probe aus der abgetrennten Fraktion oder um eine andere Probe handeln, die die Zusammensetzung der abgetrennten Fraktion darstellt. Die Bestimmung (Messung) der Strahlenbelastung kann mithilfe verschiedener Methoden erfolgen. Dazu zählen z.B. die Messung der Gamma-Strahlung mit einem (mobilen) Halbleiterdetektor oder die Bestimmung des Radongehalts. Auch mit Hilfe von Messgeräten wie Geiger-Müller-Zählrohren sind möglich., um die zu trennenden (kontaminierten und nicht kontaminierten) Bestandteile zu identifizieren. Für Beton ist hier beispielsweise die Belastung/Kontamination von Kies und Zementbindemittel als Einzelne Stoffe zu nennen zu nennen. Um den Kontaminationsgrad der betrachteten radioaktiven Bestandteile zu bestimmen, werden Größen wie Aktivität, Dosisleistung, Halbwertszeit und/oder die beim radioaktiven Zerfall entstehende Wärmeleistung berücksichtigt. Vorzugsweise wird vor dem vorgenannten Bestimmen der Dichte von schadstofffreien mineralischen Bestandteilen und schadstoffhaltigen Bestandteilen aus einer Probe diese bzw. Bestandteile dieser Probe auf ihre Strahlungsintensität hin untersucht, um die schadstofffreien mineralischen Bestandteilen und die schadstoffhaltigen Bestandteilen zu identifizieren.

Daher umfasst das betrachtete Verfahren optional zusätzlich die folgenden Schritte: Bestimmen der Strahlungsintensität von Bestandteilen aus einer Probe, die aus der abgetrennten Fraktion entnommen wird oder dieser entspricht; Identifizieren von schadstofffreien (hier: strahlungsfreien) mineralischen Bestandteilen und schadstoffhaltigen (hier: strahlungskontaminierten) Bestandteilen von den Bestandteilen aus der Probe auf Basis der bestimmten Strahlungsintensität; Bestimmen der Dichte von den schadstofffreien mineralischen Bestandteilen und den schadstoffhaltigen Bestandteilen; Bestimmen der vorbestimmten Trenndichte, die zwischen der Dichte der schadstofffreien mineralischen Bestandteile und der Dichte der schadstoffhaltigen Bestandteile liegt.

Im Allgemeinen wird bevorzugt für das Bestimmen der vorbestimmten Trenndichte die schadstofffreien (hier: strahlungsfreien) mineralischen Bestandteile und schadstoffhaltigen (hier: strahlungskontaminierten) Bestandteile der abgetrennten Fraktion identifiziert.

Bevorzugt sind weitere Verfahrensschritte vorgesehen, in dem die Feinfraktion in einen schadstofffreien mineralischen Teil und einen schadstoffhaltigen Teil getrennt werden. Die weiteren bevorzugten Verfahrensschritte umfassen:
- Nassfeinsortieren der Feinfraktion, um diese in einen schadstofffreien mineralischen Teil und einen schadstoffhaltigen Teil zu trennen,
wobei der Schritt des Nassfeinsortierens der Feinfraktion umfasst, dass:
- die Feinfraktion in eine Flüssigkeit gegeben wird, in der mehrere sich überlagernde Strömungen erzeugt werden; oder
- die Feinfraktion mit mindestens einem Flüssigkeitsstrom beaufschlagt und zusätzlich durch eine von außen auf die Feinfraktion wirkende Kraft beschleunigt wird,
   um schadstofffreie mineralische Bestandteile und schadstoffhaltige Bestandteile der Feinfraktion der Dichte nach zu trennen, und so den schadstofffreien mineralischen Teil und den schadstoffhaltigen Teil aus der Feinfraktion zu erhalten.

Für schadstoffhaltigen Schlamm, der sich bei der Nasssortierung ggf. am Boden absetzt, können die vorgenannten und nachfolgenden Verfahrensschritte der Nassfeinsortierung (zusammen mit oder unabhängig von der Feinfraktion) entsprechend angewendet werden, um eine weitere Trennung in einen schadstofffreien mineralischen Teil und einen schadstoffhaltigen Teil zu erreichen.

Analog zum vorgenannten Nasssortieren ist es in diesem Fall zweckmäßig, das Nassfeinsortieren anhand einer (weiteren) vorbestimmten Trenndichte vorzunehmen, die auf Grundlage der Dichte der schadstofffreien mineralischen und der schadstoffhaltigen Bestandteile der Feinfraktion eingestellt ist. Entsprechend weisen die schadstofffreien mineralischen Bestandteile der Feinfraktion eine höhere Dichte auf als eine vorbestimmte Trenndichte, wohingegen die schadstoffhaltigen Bestandteile der Feinfraktion eine niedrigere Dichte als die vorbestimmte Trenndichte aufweisen, oder die schadstofffreien mineralischen Bestandteile der Feinfraktion weisen eine niedrigere Dichte auf als die vorbestimmte Trenndichte, wohingegen die schadstoffhaltigen Bestandteile der Feinfraktion eine höhere Dichte als die vorbestimmte Trenndichte aufweisen. Bevorzugt wird die (weitere) vorbestimmte Trenndichte bestimmt, die zwischen der Dichte der schadstofffreien mineralischen Bestandteile und der Dichte der schadstoffhaltigen Bestandteile aus einer Probe liegt, die aus der Feinfraktion entnommen wird oder dieser entspricht. Die Bestimmung der Trenndichte kann analog zu oben mithilfe einer repräsentativen Probe erfolgen.

Die Erzeugung der Strömungen (im Schritt des Nassfeinsortierens) kann bereits während der Zugabe oder erst nach der Zugabe der Feinfraktion / des schadstoffhaltigen Schlamms erfolgen.

Bei den sich überlagernden Strömungen handelt es sich insbesondere um unterschiedlich orientierte Strömungen, d.h. sie weisen zueinander unterschiedliche Strömungsrichtungen (Fluidflussrichtungen) auf. Sie können auch turbulente Strömungen und/oder Rotationsströmungen sein. Alternativ kann die Trennung auch durch eine Kombination aus Strömung und Kraft (z.B. Zentrifugalkraft) erfolgen. Ein Wendelscheider oder Hydrozyklon arbeitet nach den genannten Wirkprinzipien.

Aufgrund der unterschiedlichen Dichten der Bestandteile in der Feinfraktion haben diese unterschiedliche Absinkgeschwindigkeiten bzw. nehmen diese unterschiedliche Bewegungsbahnen in der Flüssigkeit ein.

Durch eine geeignete Wahl der erzeugten Strömungen lässt sich zudem erreichen, dass die Bestandteile der Feinfraktion der Dichte nach einzelnen Strömungen folgen bzw. sich in bestimmte Strömungsrichtungen bewegen. Dies ermöglicht es, selbst kleinste Bestandteile (mit einer Korngröße < 2 mm) unterschiedlicher Dichte voneinander räumlich zu trennen. Im Ergebnis erhält man so eine Fraktionierung in eine schadstofffreie mineralische Fraktion und eine schadstoffhaltige (mineralische) Fraktion bei kleinen Korngrößen. Je nach Zusammensetzung des Abbruchmaterials stellt die schadstofffreie mineralische Fraktion die Leichtfraktion (Bestandteile mit niedriger Dichte) und die schadstoffhaltige Fraktion die Schwerfraktion (Bestandteile mit hoher Dichte) oder umgekehrt dar. Bei Material mit kleiner Korngröße und daher kleiner Oberfläche lässt sich der beschriebene Trennerfolg mit einer einfachen aufwärtsgerichteten Strömung (z.B. beim Hub-Senk-Verfahren) nicht erzielen.

Alternativ wird die Feinfraktion mit mindestens einem Flüssigkeitsstrom beaufschlagt. Dabei kommt die Feinfraktion mit der strömenden Flüssigkeit in Kontakt. Die Bestandteile der Feinfraktion folgen dieser strömenden Flüssigkeit. Aufgrund der unterschiedlichen Absinkgeschwindigkeiten schwimmen die Bestandteile der Feinfraktion mit geringer Dichte (Leichtfraktion) länger mit dem Flüssigkeitsstrom als die Bestandteile mit hoher Dichte (Schwerfraktion). Zusätzlich erfährt die Feinfraktion eine Krafteinwirkung und wird dadurch beschleunigt, so dass sich die Bestandteile der Feinfraktion entlang der resultierenden Kraftrichtung bewegen. Aufgrund der Massenträgheit bewegen sich die Bestandteile der Feinfraktion mit hoher Dichte (Schwerfraktion) länger in der Flüssigkeit als die Bestandteile mit geringer Dichte (Leichtfraktion). Die Krafteinwirkung auf die Feinfraktion ist vorzugsweise stoßartig und wiederholend. Sie erfolgt vorzugsweise in Form von periodischen Kraftstößen. Dadurch wird eine räumliche Trennung von Bestandteilen der Feinfraktion mit unterschiedlicher Dichte erreicht. Die Überlagerung einer Flüssigkeitsströmung, in der sich die Feinfraktion befindet, und einer auf die Feinfraktion wirkenden Kraft macht man sich z.B. bei einem Schüttelherd zunutze.

Es ist zudem von Vorteil, wenn die mehreren sich überlagernden Strömungen eine Hauptströmung und eine dazu querausgerichtete Nebenströmung umfassen, so dass der schadstofffreie mineralische Teil einer der beiden Strömungen folgt und der schadstoffhaltige Teil der anderen der beiden Strömungen folgt. Eine Überlagerung unterschiedlich ausgerichteter Strömungen tritt z.B. in einem Wendelscheider oder einem Hydrozyklon auf.

Vorzugsweise bilden die mehreren sich überlagernden Strömungen - alternativ zur Kombination von Haupt- und Nebenströmung - eine homogene Strömung, so dass der schadstofffreie mineralische Teil oder der schadstoffhaltige Teil der homogenen Strömung folgt. Eine Überlagerung von Strömungen zu einer homogenen Gesamtströmung wird z.B. in einem Aufstromsortierer erzeugt.

Bevorzugt enthält die Flüssigkeit - in die die abgetrennte Feinfraktion gegeben wird - Wasser. Die Flüssigkeit kann aber auch nur Wasser oder Wasser mit Tensiden sein. Die Zugabe von Tensiden hat jedoch den Vorteil, dass sie die Oberflächenspannung von Wasser herabsetzen und somit die Dichtetrennung von Material im Wasser begünstigt.

Bevorzugt ist ein weiterer Verfahrensschritt vorgesehen, in dem der schadstoffhaltige Schlamm und/oder die Feinfraktion gemäß einem Schwimm-/Sink-Verfahren sortiert werden, um den schadstoffhaltigen Schlamm in einen schadstofffreien mineralischen Teil und einen schadstoffhaltigen mineralischen Teil zu trennen. Bei dem genannten Schwimm- /Sink-Verfahren kann/können der schadstoffhaltige Schlamm in eine Flüssigkeit gegeben werden, wobei die Dichte der Flüssigkeit so gewählt ist, dass sich der schadstofffreie mineralische Teil von dem schadstoffhaltigen Teil trennt. Die Dichte der Flüssigkeit liegt beispielweise zwischen der Dichte des schadstofffreien mineralischen Teils und der Dichte des schadstoffhaltigen Teils. **In** diesem Verfahrensschritt lassen sich somit die feinsten schadstofffreien mineralischen Bestandteile des aufgebrochenen Abbruchmaterials vom (feinen) schadstoffhaltigen Teil abtrennen. Lediglich beispielhaft enthält die Flüssigkeit lodethan C₂H₅I oder Dichlorethan C₂H₄Cl₂ oder Salze wie Caesiumformiat. Analog zum vorgenannten Nasssortieren (oder Nassfeinsortieren) ist es in diesem Fall zweckmäßig, die Dichte der Flüssigkeit auf Grundlage der Dichte der schadstofffreien mineralischen und der schadstoffhaltigen Bestandteile des schadstoffhaltigen Schlamms und/oder der Feinfraktion zu bestimmen. Hierfür können vorab die Dichten der Bestandteile des schadstoffhaltigen Schlamms und/oder der Feinfraktion (z.B. mittels einer repräsentativen Probe) ermittelt werden.

Die vorgenannten Schritte zur Auftrennung der Bestandteile der Feinfraktion können entsprechend für schadstoffhaltigen Schlamm durchgeführt werden.

Optional werden die Feinfraktion und/oder der schadstoffhaltige Schlamm einer (geregelten) Entsorgung zugeführt oder thermisch aufbereitet. Bevorzugt wird beim betrachteten Verfahren, der weitere Schritt berücksichtigt: Erhitzen des schadstoffhaltigen Teils unter Ausschluss von Sauerstoff oder mit begrenzter Sauerstoffzufuhr, um den schadstoffhaltigen Teil thermisch aufzubereiten. Unter dem schadstoffhaltigen Teil kann der schadstoffhaltige Teil angesehen werden, der nach dem Nasssortieren der abgetrennten Fraktion übrigbleibt. Dies gilt bevorzugt auch für den schadstoffhaltigen Teil aus der Feinfraktion oder aus dem schadstoffhaltigen Schlamm. Bei der thermischen Aufbereitung wird das zugeführte Material (z.B. der schadstoffhaltige Anteil der abgetrennten Fraktion und/oder der Feinfraktion und/oder der schadstoffhaltige Schlamm) so weit erhitzt, dass die enthaltenen Schadstoffe in die Gasphase übergehen oder verbrennen. Die bei der thermischen Aufbereitung entstehenden Abgase können gefiltert werden, um die Schadstoffe zu entfernen. Durch die begrenzte Zufuhr oder den Ausschluss von Sauerstoff wird verhindert, dass der schadstofffreie Rest verbrennt. Der optionale Schritt der thermischen Aufbereitung ist insbesondere dann zweckmäßig, wenn der schadstoffhaltige Teil organische Bestandteile enthält. Sollte der schadstoffhaltige Teil strahlungskontaminiert sein, kann auf die thermische Aufbereitung verzichtet werden.

Das oben beschriebene Verfahren ist so zu verstehen, dass die einzelnen Verfahrensschritte (Aufbrechen, Klassieren, Nasssortieren usw.) mehrfach durchlaufen werden können. Dabei gilt die ausgegebene Fraktion als Eingabematerial. Die einzelnen Verfahrensschritte können unter unterschiedlichen Bedingungen, wie beispielsweise veränderten Trennkriterien (Trennkorngröße, Trenndichte), ausgeführt werden.

Ein weiterer Aspekt der Erfindung betrifft ein System zur Sanierung und Aufbereitung von Abbruchmaterial, das schadstoffhaltige mineralische Bestandteile enthält, umfassend:
- ein Brechgerät, das dazu ausgebildet ist, das Abbruchmaterial aufzubrechen, um die schadstoffhaltigen mineralischen Bestandteile zu zerteilen;
- ein dem Brechgerät nachgeschaltetes Klassiergerät, das dazu ausgebildet ist, das aufgebrochene Abbruchmaterial trocken oder nass zu klassieren, um daraus mindestens eine Fraktion abzutrennen,
- ein dem Klassiergerät nachgeschaltetes Sortiergerät, das dazu ausgebildet ist, die abgetrennte Fraktion nass zu sortieren, um diese in einen schadstofffreien mineralischen Teil und einen schadstoffhaltigen Teil zu trennen,
   wobei das Sortiergerät das Folgende umfasst:
      - einen Trennbereich zur Aufnahme einer Flüssigkeit, in die die abgetrennte Fraktion zuführbar ist; und
      - eine Strömungsmaschine zur Erzeugung einer strömenden Flüssigkeit, wobei der Trennbereich und die Strömungsmaschine derart ausgebildet sind,
   eine strömende Flüssigkeit zu erzeugen,
      um mineralische und schadstoffhaltige Bestandteile der abgetrennten Fraktion der Dichte nach zu trennen, und so den schadstofffreien mineralischen Teil und den schadstoffhaltigen Teil aus der abgetrennten Fraktion zu erhalten,
      wobei die schadstofffreien mineralischen Bestandteile der abgetrennten Fraktion eine höhere Dichte aufweisen als eine vorbestimmte Trenndichte, wohingegen die schadstoffhaltigen Bestandteile der abgetrennten Fraktion eine niedrigere Dichte als die vorbestimmte Trenndichte aufweisen, oder
      die schadstofffreien mineralischen Bestandteile der abgetrennten Fraktion eine niedrigere Dichte aufweisen als die vorbestimmte Trenndichte, wohingegen die schadstoffhaltigen Bestandteile der abgetrennten Fraktion eine höhere Dichte als die vorbestimmte Trenndichte aufweisen,
   wobei die vorbestimmte Trenndichte auf Basis der Dichte der schadstofffreien mineralischen und der schadstoffhaltigen Bestandteile der abgetrennten Fraktion eingestellt ist.

Als Brechgerät ist vorzugweise ein (mobiler) Prallmühlen- oder Backenbrecher vorgesehen. Allgemein sind jedoch auch andere Brechgeräte geeignet, die (vorzerkleinertes) Abbruchmaterial zuverlässig auf eine gewünschte Korngröße reduzieren können.

Bei dem Klassiergerät handelt es sich bevorzugt um eine (mobile) Siebmaschine (bzw. einen (mobilen) Siebturm). Die Siebmaschine kann mehrere Siebdecks mit je einem Siebgewebe (oder einer Lochplatte) und einer vorbestimmten Maschenweite (oder Lochgröße) haben, um die gewünschten Fraktionen zu trennen. Neben der abgetrennten Fraktion (z.B. Mittelfraktion) kann das Klassiergerät bevorzugt zusätzlich eine Feinfraktion und besonders bevorzugt eine Großfraktion aus dem aufgebrochenen Abbruchmaterial abtrennen.

Das Sortiergerät ist bevorzugt derart ausgebildet ist, die abgetrennte mithilfe eines Nassstroms zu sortieren, um aus der abgetrennten Fraktion in einen schadstofffreien mineralischen Teil und einen schadstoffhaltigen Teil zu trennen. Konkret wird aus der abgetrennten Fraktion eine Leichtfraktion und eine Schwerfraktion abgetrennt. Das Sortiergerät weist einen Trennbereich, vorzugweise eine Trennkammer auf, die Mittel zum Bereitstellen des Nassstroms (z.B. eine Strömungsmaschine) umfasst, in den die abgetrennte Fraktion zuführbar ist, um schadstofffreie mineralische und schadstoffhaltige Bestandteile der abgetrennten Fraktion der Dichte nach zu trennen und so den schadstofffreien mineralischen Teil und den schadstoffhaltigen Teil aus der abgetrennten Fraktion zu erhalten. Der Nassstrom ist z.B. eine in Wasser (oder in anderen Flüssigkeiten) ausgebildete Aufwärtsströmung, in der sich Leicht- und Schwerstoffe sowie vorzugweise schadstoffhaltiger Schlamm voneinander trennen. Die Aufwärtsströmung wird beispielsweise mit einem Propeller in der gefüllten Trennkammer erzeugt. In der Trennkammer befindliche Leichtstoffe können so an die Oberfläche des Wassers transportiert werden, während Schwerstoffe absinken. Somit lässt sich eine Trennung in eine Leichtfraktion aus Leichtstoffen und eine Schwerfraktion aus Schwerstoffen erzielen. Je nach Zusammensetzung der Mittelfraktion (Zuschlagsstoffe, Schadstoffanteil) wird der schadstoffhaltige Bestandteil der Mittelfraktion als Leicht- oder Schwerfraktion abgetrennt.

Ein dem Sortiergerät nachgeschaltetes Feinsortiergerät zur Auftrennung der Feinfraktion (mit einer Korngröße von z.B. über 2 mm) in schadstofffreie und schadstoffhaltige Bestandteile. Die Trennung erfolgt über die Aufteilung der Feinfraktion in eine Schwerfraktion und eine Leichtfraktion, wobei entweder die Schwerfraktion schadstofffrei mineralisch und die Leichtfraktion schadstoffhaltig oder die Schwerfraktion schadstoffhaltig und Leichtfraktion schadstofffrei mineralisch sind. Eine analoge Auftrennung ist für schadstoffhaltigen Schlamm denkbar.

Das Feinsortiergerät ist vorzugsweise so ausgebildet, dass mithilfe von Strömungen und Kräften (auch überlagernd) Leichtstoffe von Schwerstoffen getrennt werden können. Das Sortiergerät kann über eine mit einer Flüssigkeit (z.B. Wasser) gefüllten Trennbereich verfügen, in der eine Strömung, z.B. mittels einer Düse oder durch Kräfte wie z.B. der Schwerkraft oder Impulse, erzeugt wird. Im Trennbereich befindliche Leichtstoffe können so über beispielsweise unterschiedliche Laufwege von den Schwerstoffen abgetrennt werden. Somit lässt sich eine Trennung in eine Leichtfraktion aus Leichtstoffen und eine Schwerfraktion aus Schwerstoffen erzielen. Je nach Zusammensetzung wird der schadstoffhaltige Bestandteil als Leicht- oder Schwerfraktion abgetrennt.

Das Feinsortiergerät ist bevorzugt ein Wendelscheider, ein Schüttelherd, ein Hydrozyklon, oder ein Aufstromsortierer.

Der Wendelscheider nutzt die Schwerkraft und die daraus resultierenden Zentrifugalkräfte zur Dichtetrennung von Stoffen. Die entstehende Trübe (aus Schüttgut und z.B. Wasser) fließt in einer spiralförmigen Rinne (Wendelrinne) nach unten. In der Rinne können drei Strömungen unterschieden werden: eine Hauptströmung, die dem Wendelverlauf folgt, sowie eine Querströmung, die an der Trübeoberfläche nach außen und am Rinnenboden nach innen gerichtet ist. Die Schwerfraktion sammelt sich somit an der radial inneren Innenseite der Rinne - und damit im Bereich der Wendelscheiderachse - an, die Leichtfraktion an der radial äußeren Innenseite. Durch Strömungsumkehr ist jedoch auch eine umgekehrte Verteilung von Leicht- und Schwerfraktion möglich. Der Wendelscheider ist typischerweise für die Dichtetrennung von Material mit einer Korngröße von ca. 0,6 bis 2 mm vorgesehen.

Der Schüttelherd weist in der Regel eine geneigte Schüttelherdplatte auf und ist seitlich mit einem Rüttelantrieb versehen. Auf der Schüttelherdplatte strömt eine Flüssigkeit entsprechend der Neigung der Platte, wodurch sich eine Hauptströmung bildet. Wird nun Schüttgut auf die Platte gegeben, so folgt es dieser Hauptströmung. Der Rüttelantrieb bewirkt eine schnelle Änderung der Bewegungsrichtung der Platte z.B. quer zur Hauptströmungsrichtung. Die dabei auf das Schüttgut wirkenden äußeren Kräfte trennen die Bestandteile höherer Dichte (Schwerfraktion) bedingt durch ihre Massenträgheit von den der Hauptströmung folgenden Bestandteilen niedrigerer Dichte. Insbesondere entsteht durch die quer zur Hauptströmungsrichtung wirkenden Kräfte eine resultierende Kraftrichtung, entlang derer sich die Schwerfraktion bewegt. Die Schwerfraktion fällt schließlich seitlich von der Schüttelherdplatte ab, während die Leichtfraktion der Hauptströmung bis zum Ende folgt und so an anderer Stelle (z.B. in Längsrichtung) der Platte abfällt. Mit dem Schüttelherd lässt sich typischerweise Material mit einer Korngröße von 0,6 bis 2 mm trennen.

Der Hydrozyklon umfasst ein oberes zylindrisches Segment mit einer Oberlaufdüse, einem tangentialen Zulauf und einem unteren konischen Segment mit einer Unterlaufdüse. Er nutzt die Zentrifugalkräfte, die durch den tangentialen Zulauf eines Schüttgut-Wasser-Gemisches entstehen, um die schweren Bestandteile des Schüttgutes aufgrund ihrer höheren Dichte von den leichten Bestandteilen zu trennen. Durch den tangentialen Eintritt in das zylindrische Segment wird das Gemisch auf eine Kreisbahn gezwungen und bewegt sich in einem abwärts gerichteten Wirbel nach unten. Durch die Verjüngung im konischen Segment kommt es zu einer Verdrängung von Volumen nach innen und zu einem Aufstau im unteren Bereich des Konus, wodurch sich ein innerer, aufwärts gerichteter Wirbel bildet. Die schweren Bestandteile werden nach außen gedrückt und nach unten in das konische Segment und über den Unterlauf in einen Sammelbehälter abgeleitet, während die leichten Bestandteile in die Mitte wandern und nach oben über den Oberlauf austreten.

Als Feinsortiergerät kann auch ein Aufstromsortierer eingesetzt werden. Der Aufstromsortierer erzeugt eine homogene Gesamtströmung aus mehreren überlagerten Einzelströmungen. Die homogene Gesamtströmung wird durch eine Platte mit gleichmäßig verteilten Düsen erreicht, so dass oberhalb der Platte eine gleichmäßige Verteilung der Aufwärtsströmung und damit ein homogenes Wirbelbett entsteht. **In** diesem Wirbelbett wird die Leichtfraktion als Schwimmstoff im Überlauf abgeschieden. Die Schwerfraktion wird im Unterlauf abgezogen. Mit dem Aufstromsortierer kann Material mit einer Korngröße von 1 bis 3 mm fraktioniert werden.

Der schadstoffhaltige Schlamm kann von dem Feinsortiergerät weiter nasssortiert werden, um den schadstoffhaltigen Schlamm in einen schadstofffreien mineralischen Teil und einen schadstoffhaltigen Teil zu trennen. Vorzugsweise erfolgt das Nassfeinsortieren des schadstoffhaltigen Schlamms zusammen mit der Feinfraktion.

Das System kann zusätzlich einen Schwimm-Sink-Separator umfassen, der derart ausgebildet ist, eine Flüssigkeit aufzunehmen, um den schadstoffhaltigen Schlamm durch die Flüssigkeit zu leiten und so den schadstoffhaltigen Schlamm in einen schadstofffreien mineralischen Teil und einen schadstoffhaltigen mineralischen Teil zu trennen. Der Schwimm-Sink-Separator weist z.B. ein Auftriebsbecken zur Aufnahme der Flüssigkeit und des schadstoffhaltigen Schlamms auf, um den schadstofffreien und schadstoffhaltigen Anteil des Schlamms zu trennen.

Vorteile des erfindungsgemäßen Systems und dessen Ausführungsformen, sowie weitere vorteilhafte Ausführungsformen sind dem erfindungsgemäßen Verfahren, wie oben beschrieben, entsprechend zu entnehmen.

Durch die erfindungsgemäße Lösung wird es erstmals möglich, schadstoffhaltige und nichtschadstoffhaltige Bestandteile aus Abbruchmaterial, insbesondere am Ort der Abrissstelle, zu trennen. So kann wertvolles Baumaterial zurückgewonnen und schadstoffhaltiger Bauabfall erheblich reduziert werden. Des Weiteren wird durch verkürzte Transportwege, sowie die Materialrückgewinnung CO₂ eingespart. Die Verminderung deponiepflichtiger Abfälle spart außerdem wertvollen Deponieraum.

Im Folgenden werden bevorzugte Ausführungsbeispiele der vorliegenden Erfindung anhand der nachfolgenden Figuren beschrieben. Es zeigen:
Fig. 1 ein Flussdiagramm, das ein Verfahren gemäß einer Ausführungsform der vorliegenden Erfindung veranschaulicht und
Fig. 2 eine schematische Darstellung einer Ausführungsform des erfindungsgemäßen Systems.

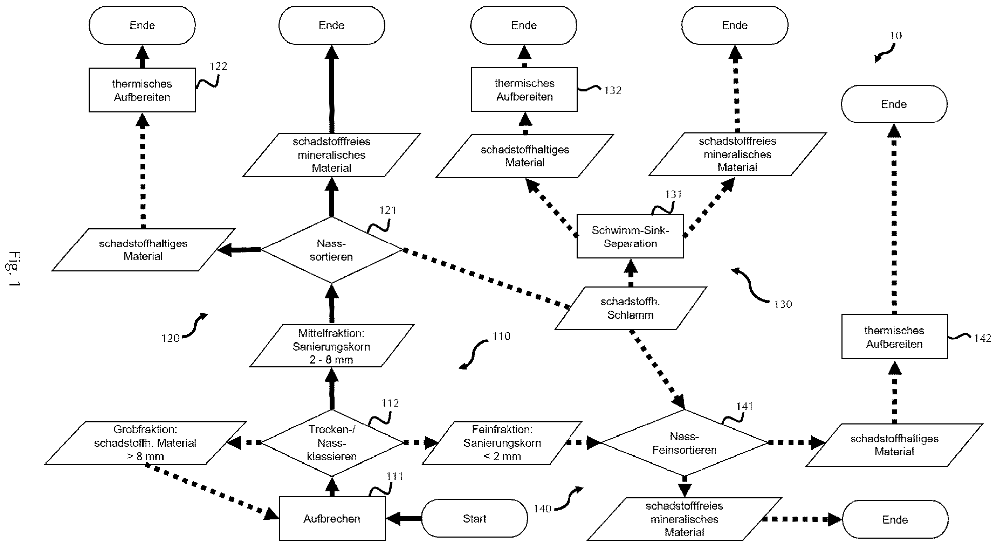

Fig. 1 zeigt ein Flussdiagramm, das ein Verfahren 10 gemäß einer Ausführungsform der vorliegenden Erfindung veranschaulicht. Die gezeigten Verfahrensschritte sind lediglich beispielhaft in vier sogenannte "Sanierungsabschnitte" 100-130 unterteilt. Sanierungsabschnitte sind dadurch gekennzeichnet, dass in jedem Abschnitt das zugeführte Material in mehrere Fraktionen klassiert/sortiert wird. Sie unterliegen außerdem unterschiedlichen Sicherheitsbestimmungen. In Sanierungsabschnitten, in dem schadstoffhaltiges Material trocken transportiert und weiterverarbeitet wird, kann man Wasserkanonen einsetzen oder den betroffenen Arbeitsbereich abschirmen (sog. Schwarzbereich), wobei ein Unterdruck gegenüber der Umgebung (bei Verwendung entsprechender Luftfilter) dauerhaft aufrechterhalten wird, um die Ausbreitung von Schadstoffen zu verhindern. Sanierungsabschnitte, bei denen schadstoffhaltige Bestandteile in Flüssigkeiten gebunden sind, erfordern hingegen weniger strenge Sicherheitsvorkehrungen. Die mit einem gestrichelten Pfeil dargestellten Fließlinien stellen optionale Verfahrensschritte dar. Die konkreten Arbeits- und Umgebungsschutzmaßnahmen richten sich nach den jeweiligen Umweltauflagen. Als Schadstoffe sind z.B. PCB, PAK, EOX und BTEX und/oder auch Stoffe vorgesehen, welche strahlungskontaminiert, also mit radioaktivem Material (radioaktiven Partikeln) kontaminiert bzw. strahlungsbelastet oder durch radioaktive Strahlung aktiviert sind.

In einem ersten Sanierungsabschnitt 110 wird das Abbruchmaterial aufgebrochen, um die mineralischen und schadstoffhaltigen Bestandteile zu zerteilen. Darüber hinaus erfolgt das Trocken- oder Nassklassieren des aufgebrochenen Abbruchmaterials, um dieses in eine Fraktion (z.B. Mittelfraktion), ggf. in eine Feinfraktion und/oder eine Grobfraktion zu trennen. Hierfür kommen ein Brechgerät (z.B. ein Prallmühlenbrecher), optional ein Magnetabscheider und ein Klassiergerät (z.B. Trocken-/Nasssiebtechnik) zum Einsatz.

Vorzerkleinertes bzw. pulverisiertes Abbruchmaterial, das schadstoffhaltige und mineralische Bestandteile enthält, kann mithilfe eines Radladers und z.B. über ein Förderband in die Aufgabe des Prallmühlenbrechers transportiert und gefüllt werden. Der Prallmühlenbrecher bricht 111 das Abbruchmaterial auf eine gewünschte Korngröße (sog. Brechgut), um die schadstoffhaltigen mineralischen Bestandteile zu zerteilen. Das mineralische schadstoffhaltige Brechgut wird sodann optional einem Magnetabscheider, der magnetische Bestandteile aufnimmt, und dann einer Trocken- bzw. Nasssiebtechnik zugeführt. Die Trocken- bzw. Nasssiebtechnik ist z.B. eine Siebmaschine, mit der das Brechgut trockenklassiert 112 (bzw. bei Zugabe von z.B. Wasser nassklassiert) wird. In der Trocken- bzw. Nasssiebtechnik wird aus der schadstoffhaltigen mineralischen Material zumindest eine Fraktion abgetrennt und ausgegeben. Dies ist zerkleinertes Abbruchmaterial mit z.B. einer mittleren Korngröße (Mittelfraktion), z.B. zwischen 2 mm und 8 mm. Optional kann zusätzlich eine weitere Fraktion abgetrennt werden, die eine feine Korngröße aufweist (Feinfraktion), z.B. kleiner als 2mm. Bei der Feinfraktion kann es sich um schadstoffhaltige Stäube und Betonsand handeln.

Sollten grobe Bestandteile mit großer Korngröße, z.B. größer als 8 mm, nach Durchlaufen des Prallmühlenbrechers erhalten bleiben, ist es von Vorteil, wenn diese Bestandteile als Grobfraktion ausgesiebt und beispielsweise über ein Förderband dem Prallmühlenbrecher erneut zugeführt werden. Dieser Rückführungsvorgang wird so oft wiederholt bis das aufgebrochene Abbruchmaterial eine Korngröße erreicht, die unterhalb der vorbestimmten Korngröße liegt.

Die zumindest eine abgetrennte Fraktion (Mittelfraktion / Sanierungskornfraktion) gelangt beispielsweise über ein Förderband in einen zweiten Sanierungsabschnitt 120, die Feinfraktion (Betonsand, Stäube) z.B. über ein Förderband in einen vierten Sanierungsabschnitt 140. Gleichermaßen gelangt eine abgetrennte Fraktion (schadstoffhaltiger Schlamm) aus dem zweiten Sanierungsabschnitt 120 in den dritten Sanierungsabschnitt 130. Der zweite bis vierte Sanierungsabschnitt 120-140 werden im Folgenden erläutert.

In dem zweiten Sanierungsabschnitt 120 wird die im ersten Sanierungsabschnitt 110 gewonnene Mittelfraktion (Sanierungskorn) nasssortiert 121, um diese in bis zu drei weitere Fraktionen zu trennen. Die drei weiteren Fraktionen aus der Mittelfraktion sind Partikel mit hoher Dichte, sogenannte Schwerstoffe, (Schwerfraktion) und Partikel mit geringer Dichte, sogenannte Leichtstoffe, (Leichtfraktion) sowie Schlamm. Je nach Zusammensetzung der verwendeten schadstoffhaltigen Produkte akkumuliert der Schadstoff in der Leicht- oder Schwerfraktion und schadstofffreie mineralisches Material in der Schwer- oder Leichtfraktion. Um die gewünschte Fraktionierung zu erzielen, wird die Trenndichte der Nasssortierung 121 z.B. auf Basis der Dichte der schadstofffreien mineralischen und der schadstoffhaltigen Bestandteile der abgetrennten Fraktion eingestellt. Wie oben bereits dargelegt, können hierfür die Dichte von schadstofffreien mineralischen Bestandteilen und die Dichte von schadstoffhaltigen Bestandteilen aus einer Probe ermittelt werden, die aus der abgetrennten Fraktion entnommen ist oder dieser entspricht. Ferner ist es zweckmäßig, die Dichte von schadstofffreien mineralischen Bestandteilen und von schadstoffhaltigen Bestandteilen aus einer Probe zu ermitteln, die aus dem Abbruchmaterial oder dem aufgebrochenen Abbruchmaterial entnommen ist oder dieser Probe entspricht. Bevorzugt wird für das Nasssortieren eine Nasstrenntechnik verwendet. Denkbar ist eine Nasstrenntechnik, die auf Basis eines Aufstromverfahrens oder mithilfe von Hub- und Senktechnik funktioniert. Für welches Trennverfahren man sich schlussendlich entscheidet, hängt von vielen Faktoren ab, wie die Verarbeitungsmenge, räumliche Vorgaben, die Lieferzeit der technischen Anlagen, dem Schadstoffgehalt im schadstoffhaltigen Abbruchmaterial und die Wirtschaftlichkeit.

Die schadstoffhaltige Fraktion (Leicht- oder Schwerfraktion) gelangt z.B. über ein Förderband in einen Bereich und wird thermisch aufbereitet 122. Die schadstoffhaltige Fraktion wird unter Ausschluss von Sauerstoff oder mit begrenzter Sauerstoffzufuhr erhitzt, um den schadstoffhaltigen Anteil in die Gasphase übergehen zu lassen bzw. um diesen gezielt zu verbrennen. Bei Schadstoffen wie z.B. PCB ist es denkbar, dass die thermische Aufbereitung (unter kontrollierten Bedingungen) nicht innerhalb einer Temperaturspanne zwischen 200 °C und 1000 °C stattfindet, um die Bildung hochgiftiger Gase zu verhindern. Die schadstofffreie Fraktion wird z.B. mittels eines Förderbands aus der Nasstrenntechnik transportiert und ist aus schadstofffreiem mineralischem Material, welches dem Stoffkreislauf zugeführt werden kann. Alternativ kann die schadstoffhaltige Fraktion in Big Bags verpackt und gemäß Behördenvorgabe (z.B. auf einer entsprechenden Deponie) beseitigt werden. Sollte die schadstoffhaltige Fraktion strahlungskontaminiert sein, ist ein thermisches Aufbereiten vorzugsweise nicht vorgesehen.

Die Fraktion Schlamm kann alternativ dem dritten Sanierungsabschnitt 130 zugeführt werden. Sollte der dritte Sanierungsabschnitt 130 (z.B. je nach Menge oder aus wirtschaftlichen Gründen) für die weitere Aufbereitung dieser Fraktion nicht in Betracht kommen, so kann sie thermisch aufbereitet oder entsprechend beseitigt werden.

In dem dritten Sanierungsabschnitt 130 erfolgt das Sortieren des schadstoffhaltigen Schlamms gemäß einem Schwimm-/Sink-Verfahren 131, um den Schlamm in einen schadstofffreien mineralischen Teil und einen schadstoffhaltigen Teil zu trennen. Für diesen Sanierungsabschnitt 130 kann ein Schwimm-Sink-Separator eingesetzt werden, der beispielweise über ein Auftriebbecken und ein Wasserbecken verfügt. Dabei werden in dem Auftriebbecken der schadstoffhaltige Schlamm durch Flüssigkeit geleitet und so schadstoffhaltige mineralisches Material vom schadstofffreien mineralischen Material abgetrennt 131. Die Dichte der Flüssigkeit ist hierbei abhängig von der Art und Weise der Schadstoffverwendung (bzw. der Dichte des strahlungskontaminierten Stoffes) im Abbruchmaterial und kann zwischen den schadstoffhaltigen und den mineralischen schadstofffreien Partikeln liegen. Das abgetrennte schadstoffhaltige Material kann ferner abgesetzt sowie gefiltert, ausgegeben und anschließend thermisch aufbereitet 122 werden. Für das Absetzen und Filtern des schadstoffhaltigen Materials ist beispielweise ein mit einer Flüssigkeit gefülltes Absetzbecken mit Filter vorgesehen. Im Absetzbecken sinkt die schwere Fraktion zu Boden, die leichte Fraktion treibt an der Oberfläche der Flüssigkeit. Das Absetzbecken ist z.B. in Form eines Überlaufs konstruiert, wobei am Überlauf sich der Filter befindet. An dieser wird die aufschwimmende Fraktion zurückgehalten. Die Flüssigkeit kann passieren. Je nach Zusammensetzung des schadstoffhaltigen Materials setzen sich schadstoffhaltige Bestandteile am Beckenboden oder im Filter ab. Abschließend können die schadstoffhaltigen Materialien - wie bereits erwähnt - thermisch aufbereitet 122 und/oder vorzugsweise gemäß Behördenvorgabe (z.B. auf einer entsprechenden Deponie) entsorgt werden.

Der schadstofffreie mineralische Teil des sortierten Schlamms kann anschließend zur Reinigung einem Wasserbecken zugeführt und ausgeschleust werden. Der schadstofffreie mineralische Teil steht nach der Reinigung dann wieder dem Stoffkreislauf zur Verfügung oder kann mit geringeren Anforderungen entsorgt werden.

In einem vierten Sanierungsabschnitt 140 wird die im ersten Sanierungsabschnitt 110 gewonnene Feinfraktion nassfeinsortiert 141, um diese in zwei weitere Fraktionen der Dichte nach zu trennen. Die zwei weiteren Fraktionen aus der Feinfraktion sind Bestandteile mit hoher Dichte, sogenannte Schwerstoffe, (Schwerfraktion) und Bestandteile mit geringer Dichte, sogenannte Leichtstoffe, (Leichtfraktion). Je nach Zusammensetzung des schadstoffhaltigen/strahlungskontaminierten Materials reichert sich der Schadstoff (z.B. PCB, PAK, BTEX, oder das strahlungskontaminierte Material) in der Leicht- oder Schwerfraktion und das schadstofffreie mineralische Material entsprechend in der Schwer- bzw. Leichtfraktion an. Der Schritt des Nassfeinsortierens der Feinfraktion 141 umfasst, dass die Feinfraktion in eine Flüssigkeit gegeben wird, in der mehrere sich überlagernde Strömungen erzeugt werden. Die Verwendung mehrerer Strömungen ermöglicht erst die Dichtetrennung der Bestandteile mit geringer Korngröße. So können die Bestandteile in Abhängigkeit ihrer Dichte bestimmten Strömungen folgen. Schwere Bestandteile folgen z.B. einer Hauptströmung und leichte Bestandteile einer z.B. quer zur Hauptströmung ausgerichteten Nebenströmung. Es sind aber auch andere Strömungskonfigurationen denkbar, die für die räumliche Trennung von leichten Bestandteilen und schweren Bestandteilen geeignet ist. Alternativ wird die Feinfraktion mit einem Flüssigkeitsstrom beaufschlagt und zusätzlich durch eine von außen auf die Feinfraktion wirkende Kraft beschleunigt. Bestandteile mit geringer Dichte folgen insbesondere der Strömungsrichtung, während Bestandteile mit hoher Dichte bevorzugt der Richtung der einwirkenden Kraft folgen. Das Hub-Senk-Verfahren (mit pulsierender Aufwärtsströmung) könnten hingegen für das Sortieren der Feinfraktion aufgrund der geringen Korngröße nicht geeignet sein. Bevorzugt wird für diesen Zweck eine entsprechende Nasstrenntechnik für geringe Korngrößen verwendet. Sollte sich die Feinfraktion hingegen durch das Schwimm-/Sink-Verfahren trennen lassen, kann dieses Verfahren als Alternative zum Nassfeinsortieren (vierter Sanierungsabschnitt 140) eingesetzt werden.

Die schadstoffhaltige Fraktion (Leicht- oder Schwerfraktion) gelangt z.B. über ein Förderband in einen Bereich und wird thermisch aufbereitet 142. Alternativ kann die schadstoffhaltige Fraktion gemäß Behördenvorgabe verpackt und (z.B. auf einer entsprechenden Deponie) beseitigt werden. Die schadstofffreie Fraktion ist aus mineralischem Material, welches dem Stoffkreislauf zugeführt werden kann.

Die Schritte des dritten und vierten Sanierungsabschnitts 130, 140 sind rein optional. Für den dritten und vierten Sanierungsabschnitt 130, 140 können zudem Trenndichten bestimmt werden, anhand derer die Fraktionierung gemäß dem Schwimm-/Sink-Verfahren 131 und/oder das Nassfeinsortieren 141 erfolgt. Die Trenndichten lassen sich durch die Bestimmung der Dichte von schadstofffreien und schadstoffhaltigen Bestandteilen einer Probe ermitteln. Diese Probe kann dem schadstoffhaltigen Schlamm und/oder der Feinfraktion entnommen werden oder deren Zusammensetzung repräsentieren (z.B. eine frühere Probe aus einer anderen vergleichbaren Fraktion).

Bei Schadstoffen aus strahlungskontaminierten Materialien ist es außerdem hilfreich, die Strahlenbelastung bzw. -intensität (Kontaminationsgrad) der einzelnen Bestandteile zu bestimmen. Dies kann beispielsweise mit einem Halbleiterdetektor oder einem Geiger-Müller-Zähler erfolgen. Vorzugsweise wird vor der Bestimmung der Dichte von schadstofffreien und schadstoffhaltigen mineralischen Bestandteilen einer Probe diese bzw. die Bestandteile dieser Probe auf ihre Strahlungsintensität hin untersucht, um die schadstofffreien und die schadstoffhaltigen Bestandteile zu identifizieren.

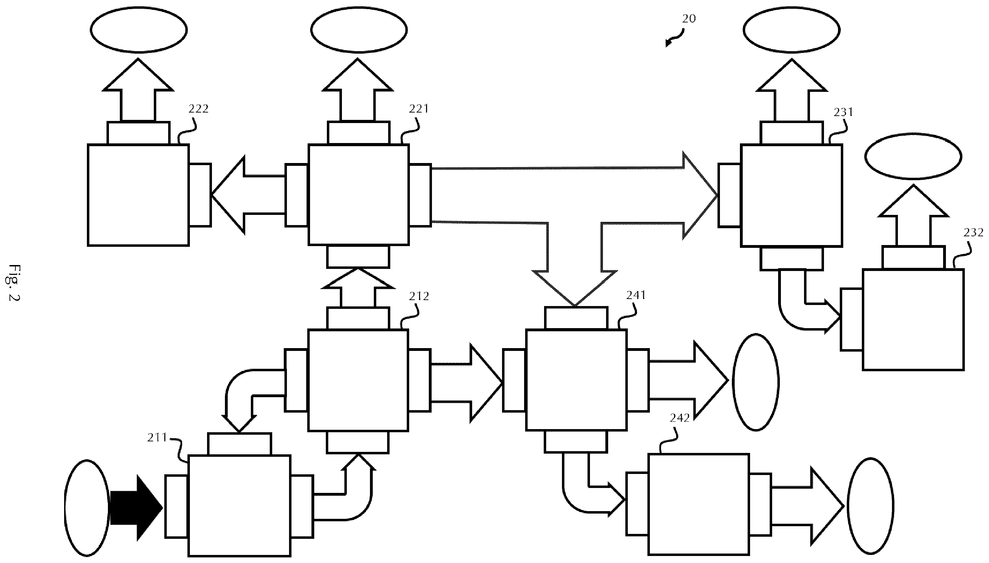

Fig. 2 zeigt eine Ausführungsform des erfindungsgemäßen Systems 20 und ist so ausgebildet, dass es das Verfahren gemäß Fig. 1 ausführen kann.

Das System 20 weist beispielsweise eine Materialaufgabe zur Aufnahme von (vorzerkleinertem) Abbruchmaterial mit mineralischen und schadstoffhaltigen Bestandteilen auf. Von der Materialaufgabe kann ein Förderband zur Aufgabe eines Brechgeräts 211, z.B. eines Prallmühlenbrechers, führen, um das Abbruchmaterial zu transportieren. Das Brechgerät 211 ist dazu ausgebildet, das Abbruchmaterial aufzubrechen, so dass die mineralischen schadstoffhaltigen Bestandteile zerteilt werden. Für die Abscheidung von magnetischen Stoffen ist dem Brechgerät 211 vorzugweise ein Magnetabscheider nachgeschaltet. Das System 20 weist ferner ein Klassiergerät 212 auf, wie Trocken- bzw. Nasssiebtechnik. Mit dem Klassiergerät 212 wird aufgebrochenes Abbruchmaterial trocken- bzw. nassklassiert, um eine Mittelfraktion (Sanierungskorn) und optional eine Feinfraktion (schadstoffhaltiger Staub, Betonsand) und/oder eine Grobfraktion zu erhalten. Die erhaltenen Fraktionen stehen dann beispielsweise in entsprechenden Ausgaben, der Ausgabe für die Mittelfraktion, die Feinfraktion und die Grobfraktion, zur Verfügung.

Zum Nasssortieren der Mittelfraktion ist ein Sortiergerät 221, z.B. Nasstrenntechnik, vorgesehen. Das Sortiergerät 221 weist z.B. eine Aufgabe auf, in die die Mittelfraktion (Sanierungskorn) gefüllt werden kann, sowie eine Ausgabe für die gewonnenen schadstofffreien mineralischen Stoffe (Schwer- oder Leichtfraktion), eine Ausgabe für die schadstoffhaltigen mineralischen Stoffe (Leicht- oder Schwerfraktion) und eine Ausgabe für schadstoffhaltigen Schlamm. Es kann zudem eine Station 222 zum thermischen Aufbereiten von schadstoffhaltigem Material vorgesehen sein.

Sollte der vom Sortiergerät 221 erhaltene Schlamm weiter aufbereiten werden, kann das System 20 über einen Schwimm-Sink-Separator 231 mit einer entsprechenden Aufgabe verfügen. Im Schwimm-Sink-Separator 231, der z.B. ein Auftriebbecken aufweist, wird der Schlamm durch Flüssigkeit geleitet und so schadstoffhaltiges Material vom schadstofffreien mineralischen Material abgetrennt und in der Ausgabe ausgegeben. Dem Auftriebbecken des Schwimm-Sink-Separators 231 kann zudem ein Wasserbecken nachgeschaltet sein, um schadstofffreies mineralisches Material reinigen zu können. Das gereinigte Material steht dann z.B. in der Ausgabe des Wasserbeckens zur Verfügung. Das im Auftriebbecken gewonnene schadstoffhaltige Material lässt sich beispielsweise in einem Absetzbecken (mit Filter) sedimentieren oder filtern und anschließend extrahieren. **In** einer Station 232 kann dann das extrahierte schadstoffhaltige Material thermisch aufbereitet werden.

Sollte die von dem Klassiergerät 212 erhaltene Feinfraktion weiter aufbereitet werden, kann das System 20 ferner ein Feinsortiergerät 241 aufweisen. Dem Klassiergerät 212 ist dann das Feinsortiergerät 241 nachgeschaltet, welches dazu ausgebildet ist, die gewonnene Feinfraktion gemäß der Dichte ihrer Bestandteile in einen schadstofffreien mineralischen Teil und einen schadstoffhaltigen Teil zu trennen. **In** Abhängigkeit der Zusammensetzung der Feinfraktion stellt der schadstofffreie mineralische Teil die Leichtfraktion und der schadstoffhaltige Teil die Schwerfraktion oder umgekehrt dar. Bei dem Feinsortiergerät 241 handelt sich vorzugweise um einen Wendelscheider, einen Schüttelherd, einen Hydrozyklon, oder einen Aufstromsortierer. Bei dem Wendelscheider und dem Hydrozyklon handelt es sich um Sortiergeräte, die eine Flüssigkeit mit mehreren sich überlagernden Strömungen bereitstellen können, worin sich die Feinfraktion der Dichte nach auftrennen lässt. Der Schüttelherd stellt einen Flüssigkeitsstrom bereit, mit dem die Feinfraktion beaufschlagt wird, und erzeugt eine von außen auf die Feinfraktion wirkende Kraft, insbesondere periodisch wirkende Kräfte, die die Feinfraktion beschleunigen. Je nach Dichte der Bestandteile folgen sie entweder dem Flüssigkeitsstrom oder der Richtung der wirkenden Kraft. Es kann zudem eine Station 242 zum thermischen Aufbereiten des schadstoffhaltigen Teils der Feinfraktion vorgesehen sein.

Alternativ kann die Feinfraktion (wie auch der schadstoffhaltige Schlamm) über den Schwimm-Sink-Separator 231 weiter aufbereitet werden.

Den verschiedenen Sortiergeräten (Sortiergerät 221, Schwimm-Sink-Separator 231 und Feinsortiergerät 241) können ein oder mehrere Dichtemessgeräte vorgeschaltet werden. Mithilfe dieser Messgeräte kann die Dichte der schadstofffreien und schadstoffhaltigen Bestandteile des zu trennenden Materials bestimmt werden. Auf diese Weise lassen sich die jeweiligen Trenndichten für die Dichtetrennung in die einzelnen Fraktionen ermitteln. Die Sortiergeräte können um ein Strahlungsmessgerät (integriert oder separat) ergänzt werden, um bei strahlungskontaminiertem Material die schadstoffhaltigen (radioaktiven) von den schadstofffreien (nicht radioaktiven) Bestandteilen zu identifizieren. Die Dichte der identifizierten Bestandteile kann dann mit dem Dichtemessgerät bestimmt werden.

Es können Komponenten oder Anlagen, die für die Sanierung und Aufbereitung von schadstoffhaltigem Abbruchmaterial nützlich sind, teilweise weggelassen, ersetzt oder hinzugefügt werden.

### Liste der Bezugszeichen:

10 Verfahren zur Sanierung und Aufbereitung von Abbruchmaterial, das schadstoffhaltige mineralische Bestandteile enthält;
110 Erster Sanierungsabschnitt;
111 Aufbrechen des Abbruchmaterials (z.B. durch einen Prallmühlenbrecher);
112 Trocken- oder Nassklassieren des aufgebrochenen schadstoffhaltigen Abbruchmaterials (in eine Fein-, Mittel-, und/oder Grobfraktion);
120 Zweiter Sanierungsabschnitt;
121 Nasssortieren der Mittelfraktion (z.B. durch Nassstromtechnik oder Hub-Senktechnik) in schadstoffhaltiges Material und schadstofffreies mineralisches Material;
122 Thermisches Aufbereiten des schadstoffhaltigen Materials (Leicht- oder Schwerfraktion);
130 Dritter Sanierungsabschnitt;
131 Schwimm-Sink-Separation von schadstoffhaltigem Material vom schadstofffreien mineralischen Material aus schadstoffhaltigem Schlamm;
132 Thermisches Aufbereiten des schadstoffhaltigen Materials (Leicht- oder Schwerfraktion);
140 Vierter Sanierungsabschnitt;
141 Nass(fein)sortieren der Feinfraktion (in eine Leicht- und Schwerfraktion: schadstoffhaltiges Material und schadstofffreies mineralisches Material);
142 Thermisches Aufbereiten des schadstoffhaltigen Materials (Leicht- oder Schwerfraktion);
20 System zur Sanierung und Aufbereitung von Abbruchmaterial;
211 Brechgerät, z.B. Prallmühlenbrechers;
212 Klassiergerät, z.B. Trocken-/Nasssiebtechnik;
221 Sortiergerät, z.B. Nassdichtetrenner;
222 Station zum thermischen Aufbereiten;
231 Schwimm-Sink-Separator;
232 Station zum thermischen Aufbereiten;
241 Feinsortiergerät, z.B. Nassdichtetrenner (für feine Korngrößen);
242 Station zum thermischen Aufbereiten.

## Patentansprüche

1. Verfahren zur Sanierung und Aufbereitung von Abbruchmaterial, das schadstoffhaltige mineralische Bestandteile enthält, wobei das Verfahren die folgenden Schritte aufweist:
- Aufbrechen (102) des Abbruchmaterials, um die schadstoffhaltigen mineralischen Bestandteile zu zerteilen;
- Trocken- oder Nassklassieren (104) des aufgebrochenen Abbruchmaterials, um daraus mindestens eine Fraktion abzutrennen;
- Nasssortieren (111) der abgetrennten Fraktion, um diese in einen schadstofffreien mineralischen Teil und einen schadstoffhaltigen Teil zu trennen,
wobei im Schritt des Nasssortierens die abgetrennte Fraktion in eine strömende Flüssigkeit gegeben wird, um schadstofffreie mineralische und schadstoffhaltige Bestandteile der abgetrennten Fraktion der Dichte nach zu trennen, und so den schadstofffreien mineralischen Teil und den schadstoffhaltigen Teil aus der abgetrennten Fraktion zu erhalten,
wobei die schadstofffreien mineralischen Bestandteile der abgetrennten Fraktion eine höhere Dichte aufweisen als eine vorbestimmte Trenndichte, wohingegen die schadstoffhaltigen Bestandteile der abgetrennten Fraktion eine niedrigere Dichte als die vorbestimmte Trenndichte aufweisen, oder
die schadstofffreien mineralischen Bestandteile der abgetrennten Fraktion eine niedrigere Dichte aufweisen als die vorbestimmte Trenndichte, wohingegen die schadstoffhaltigen Bestandteile der abgetrennten Fraktion eine höhere Dichte als die vorbestimmte Trenndichte aufweisen,
wobei die vorbestimmte Trenndichte auf Basis der Dichte der schadstofffreien mineralischen und der schadstoffhaltigen Bestandteile der abgetrennten Fraktion eingestellt ist.

2. Verfahren gemäß Anspruch 1, umfassend die weiteren Schritte:
- Bestimmen der Dichte von schadstofffreien mineralischen Bestandteilen und schadstoffhaltigen Bestandteilen aus einer Probe, die aus der abgetrennten Fraktion entnommen wird oder dieser entspricht,
- Bestimmen der vorbestimmten Trenndichte, die zwischen der Dichte der schadstofffreien mineralischen Bestandteile und der Dichte der schadstoffhaltigen Bestandteile aus der Probe liegt.

3. Verfahren gemäß Anspruch 1 oder 2, wobei das Nasssortieren der abgetrennten Fraktion mithilfe eines Aufstrom- oder Hub-Senkverfahrens erfolgt.

4. Verfahren gemäß einem der vorherigen Ansprüche, wobei im Schritt des Trocken- oder Nassklassierens das aufgebrochene Abbruchmaterial zusätzlich in eine Feinfraktion, deren Korngröße unter der Korngröße der abgetrennten Fraktion liegt, getrennt wird.

5. Verfahren gemäß Anspruch 4, wobei die Feinfraktion eine Korngröße von weniger als 5 mm, bevorzugt von weniger als 2 mm aufweist.

6. Verfahren gemäß Anspruch 4 oder 5, umfassend die weiteren Schritte:
- Nassfeinsortieren der Feinfraktion, um diese in einen schadstofffreien mineralischen Teil und einen schadstoffhaltigen Teil zu trennen,
wobei der Schritt des Nassfeinsortierens der Feinfraktion umfasst, dass:
- die Feinfraktion in eine Flüssigkeit gegeben wird, in der mehrere sich überlagernde Strömungen erzeugt werden; oder
- die Feinfraktion mit mindestens einem Flüssigkeitsstrom beaufschlagt und zusätzlich durch eine von außen auf die Feinfraktion wirkende Kraft beschleunigt wird,
um schadstofffreie mineralische Bestandteile und schadstoffhaltige Bestandteile der Feinfraktion der Dichte nach zu trennen, und so den schadstofffreien mineralischen Teil und den schadstoffhaltigen Teil aus der Feinfraktion zu erhalten.

7. Verfahren gemäß Anspruch 6, wobei die mehreren sich überlagernden Strömungen:
- eine Hauptströmung und eine dazu querausgerichtete Nebenströmung umfassen, so dass der schadstofffreie mineralische Teil einer der beiden Strömungen folgt und der schadstoffhaltige Teil der anderen der beiden Strömungen folgt, oder
- eine homogene Strömung bilden, so dass der schadstofffreie mineralische Teil oder der schadstoffhaltige Teil der homogenen Strömung folgt.

8. Verfahren gemäß einem der vorherigen Ansprüche, wobei im Schritt des Nasssortieren der abgetrennten Fraktion zusätzlich schadstoffhaltiger Schlamm abgetrennt wird.

9. Verfahren gemäß Anspruch 8, umfassend den weiteren Schritt:
- Sortieren (121) des schadstoffhaltigen Schlamms gemäß einem Schwimm-/Sink-Verfahren, um den schadstoffhaltigen Schlamm in einen schadstofffreien mineralischen Teil und einen schadstoffhaltigen Teil zu trennen.

10. Verfahren gemäß einem der vorherigen Ansprüche, wobei im Schritt des Trocken- oder Nassklassierens das aufgebrochene Abbruchmaterial zusätzlich in eine Grobfraktion, deren Korngröße über der Korngröße der abgetrennten Fraktion liegt, getrennt wird.

11. Verfahren gemäß Anspruch 10, wobei die Grobfraktion eine Korngröße von mehr als 32 mm, bevorzugt von mehr als 8 mm aufweist.

12. Verfahren gemäß Anspruch 10 oder 11, umfassend den weiteren Schritt:
- Aufbrechen der Grobfraktion, um die in der Grobfraktion enthaltenen mineralischen und schadstoffhaltigen Bestandteile weiter zu zerteilen.

13. Verfahren gemäß einem der vorherigen Ansprüche, umfassend den weiteren Schritt:
- Erhitzen des schadstoffhaltigen Teils unter Ausschluss von Sauerstoff oder mit begrenzter Sauerstoffzufuhr, um den schadstoffhaltigen Teil thermisch aufzubereiten.

14. System zur Sanierung und Aufbereitung von Abbruchmaterial, das schadstoffhaltige mineralische Bestandteile enthält, umfassend:
- ein Brechgerät (211), das dazu ausgebildet ist, das Abbruchmaterial aufzubrechen, um die schadstoffhaltigen mineralischen Bestandteile zu zerteilen;
- ein dem Brechgerät (211) nachgeschaltetes Klassiergerät (212), das dazu ausgebildet ist, das aufgebrochene Abbruchmaterial trocken oder nass zu klassieren, um daraus mindestens eine Fraktion abzutrennen,
- ein dem Klassiergerät (212) nachgeschaltetes Sortiergerät (221), das dazu ausgebildet ist, die abgetrennte Fraktion nass zu sortieren, um diese in einen schadstofffreien mineralischen Teil und einen schadstoffhaltigen Teil zu trennen,
wobei das Sortiergerät (221) das Folgende umfasst:
- einen Trennbereich zur Aufnahme einer Flüssigkeit, in die die abgetrennte Fraktion zuführbar ist; und
- eine Strömungsmaschine zur Erzeugung einer strömenden Flüssigkeit,
wobei der Trennbereich und die Strömungsmaschine derart ausgebildet sind, eine strömende Flüssigkeit zu erzeugen,
um mineralische und schadstoffhaltige Bestandteile der abgetrennten Fraktion der Dichte nach zu trennen, und so den schadstofffreien mineralischen Teil und den schadstoffhaltigen Teil aus der abgetrennten Fraktion zu erhalten,
wobei die schadstofffreien mineralischen Bestandteile der abgetrennten Fraktion eine höhere Dichte aufweisen als eine vorbestimmte Trenndichte, wohingegen die schadstoffhaltigen Bestandteile der abgetrennten Fraktion eine niedrigere Dichte als die vorbestimmte Trenndichte aufweisen, oder
die schadstofffreien mineralischen Bestandteile der abgetrennten Fraktion eine niedrigere Dichte aufweisen als die vorbestimmte Trenndichte, wohingegen die schadstoffhaltigen Bestandteile der abgetrennten Fraktion eine höhere Dichte als die vorbestimmte Trenndichte aufweisen,
wobei die vorbestimmte Trenndichte auf Basis der Dichte der schadstofffreien mineralischen und der schadstoffhaltigen Bestandteile der abgetrennten Fraktion eingestellt ist.

15. System gemäß Anspruch 14, ferner umfassend:
- ein Dichtemessgerät, das derart ausgebildet ist, schadstofffreie mineralische Bestandteile und schadstoffhaltige Bestandteile aus einer Probe, die der abgetrennten Fraktion entnommen ist oder dieser entspricht, aufzunehmen, um die Dichte der schadstofffreien mineralischen Bestandteile und der schadstoffhaltigen Bestandteile zu bestimmen und um die vorbestimmte Trenndichte zu bestimmen, wobei die vorbestimmte Trenndichte zwischen der Dichte der schadstofffreien mineralischen Bestandteile und der Dichte der schadstoffhaltigen Bestandteile aus der Probe liegt.
